# EUROPEAN PATENT APPLICATION

(11) **EP 1 758 111 A2**
(43) Date of publication of application: **28.02.2007**
(21) Application number: 06017244.2
(22) Date of filing: 18.08.2006
(51) Int. Cl.: G11B 17/028

(54) **Clamping apparatus for disk drive**

(30) Priority: 26.08.2005 KR 20050079008
(71) Applicant: Hitachi-LG Data Storage Korea Inc., Seoul City 150-721 (KR)
(72) Inventor: Ryu, Kye Yeon, Pyeongtaek City Gyeonggi-do, 451-862 (KR)
(74) Representative: Vossius & Partner

(57) **Abstract**

Disclosed is a clamping apparatus for a disk drive. The clamping apparatus includes a clamp selectively attached to a turntable to fix a disk, and formed with a hook wing protruding in a centrifugal direction along an outer circumferential edge thereof, a hook section provided with a clamp through-hole through which the clamp is penetrated and which has a diameter smaller than that of the hook wing, and hooking and supporting the hook wing of the clamp, and an unclamping protrusion provided one side between the hook section and the hook wing, and first contacted with the hook section or the hook wing when the disk is unloaded to apply unclamping force. The unclamping protrusion is located at a position most distant from a lifting center of a pickup base having the turntable on which the disk is seated. Thereby, clamping force by which the clamp clamps the disk increases relatively, while the unclamping force for separating the clamp from the turntable decreases relatively, so that operational reliability of the disk drive is improved.

## Description

The present invention relates to a disk drive, and more particularly to a clamping apparatus for a disk drive, capable of rotatably clamping the disk on a turntable.

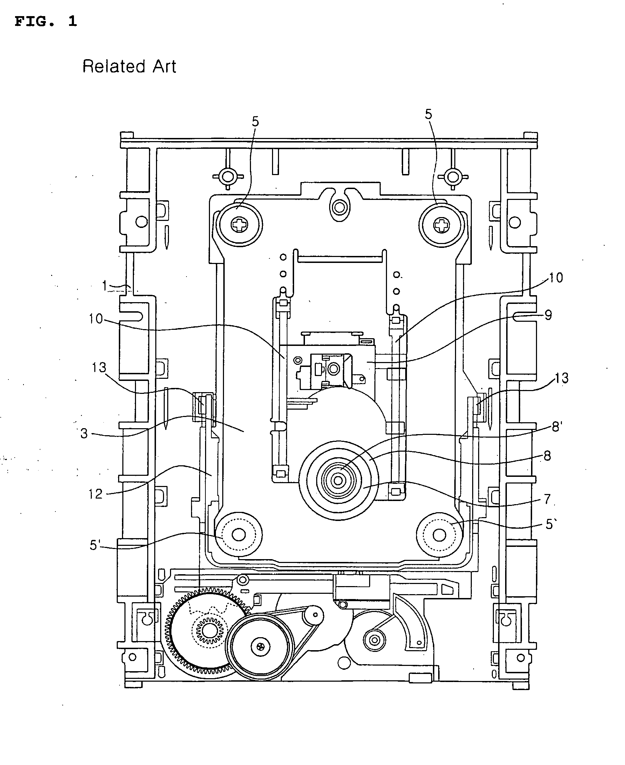

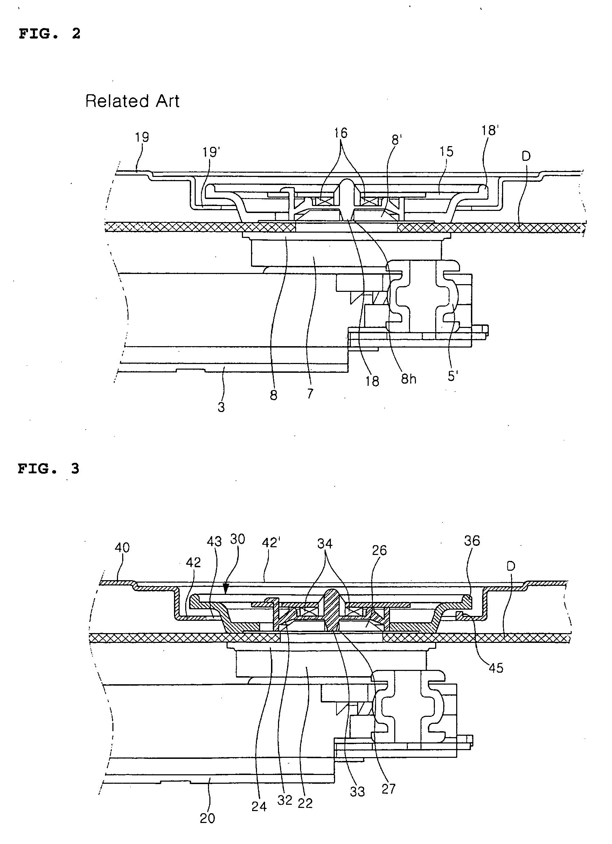

The construction of an ordinary disk drive is illustrated in FIGS. 1 and 2. As illustrated in FIGS. 1 and 2, a main base 1 makes up a framework of the disk drive. The main base 1 is provided in the center thereof with a substantially quadrangular through-hole, in which a pickup base 3 is installed.

The pickup base 3 is supported on the main base 1 through anti-vibrators 5 on a rear end thereof. Each anti-vibrator 5 is made of an elastic material, and supports the pickup base 3 on the main base 1 and simultaneously prevents vibration and noise from being transmitted between the pickup base 3 and the main base 1.

The pickup base 3 is provided with a spindle motor 7 for rotating a disk. The spindle motor 7 is provided at an upper end thereof with a turntable 8, which is rotated by the spindle motor 7 and on which a disk D is seated. The turntable 8 is provided with an insertion cone 8', which protrudes from the center of a top surface of the turntable and onto an outer circumferential surface of which a middle through-hole of the disk D is pressed. The insertion cone 8' is formed at the center thereof with a guide hole 8h.

An optical pickup 9 is installed on the pickup base 3 so as to be guided along guide axles 10. The optical pickup 9 is for irradiating a signal recording surface of the disk D to record a signal or read out a recorded signal, and is driven to move along the guide axles 10 by a sled motor (not shown).

Meanwhile, the pickup base 3 is supported on a lifting base 12 at a front end thereof. Anti-vibrators 5' are also installed between the lifting base 12 and the pickup base 3, thereby supporting the pickup base 3 on the lifting base 12 and simultaneously preventing transmission of vibration and noise.

The lifting base 12 is provided on opposite rear ends thereof with rotational axles 13, each of which is inserted into the main base 1 and thereby serves as a center of rotation about which a front end of the lifting base 12 is raised and lowered.

Now, a construction of the clamping apparatus adapted to prevent the disk D seated on the turntable 8 from being fluctuated during rotation will be described. It is a clamp 15 that fixes the disk D to the turntable 8. The clamp 15 has the shape of a substantially circular plate, in which a magnet 16 is installed. The clamp 15 is provided on a bottom surface thereof with a guide nose 18, which is inserted into the guide hole 8h of the insertion cone 8'. The circular plate-like clamp 15 is formed with a hook wing 18', which surrounds an edge of the clamp 15 and is stepped to be located at a position higher than the bottom surface of the clamp 15.

The clamp 15 is disposed in a recess 19', which is concavely formed in a cabinet 19 forming an external appearance of at least a top surface and opposite sides of the disk drive. The recess 19' is formed with a top surface of the cabinet 19 depressed, through which the clamp 15 is penetrated. When the clamp 15 is not seated on the turntable 8, the hook wing 18' is hooked in the recess 19' and thus supported by the cabinet 19.

In the prior art having the above-described construction, the pickup base 3 is raised at its front end while cooperating with operation where the disk D is loaded into the disk drive by a tray. Therefore, the pickup base 3 moves upward to cause the clamp 15 to be attached to the turntable 8 while seating the disk D, which is transferred to a position corresponding to an upper portion of the turntable 8, on the turntable 8.

In this state, as illustrated in FIG. 2, the clamp 15 fixes the disk D seated on the turntable 8 while being attached to the turntable 8 by magnetic force of the magnet 16, so that the disk D is prevented from slipping on the turntable 8. At this time, the guide nose 18 is inserted into the guide hole 8h, and the clamp 15 is raised together with the turntable 8, so that the hook wing 18' is not hooked in the recess 19', as illustrated in FIG. 2.

However, the above-described prior art has the following problems.

As a rotation speed of the disk D becomes gradually faster, the disk D can deviate from its center and escape when shocked. In order to solve these problems, the clamp 15 increases its clamping force for fixing the disk D to the turntable 8, for instance, in such a manner that the magnetic force of the magnet 16 is made stronger.

However, the stronger the clamping force of the clamp 15 becomes, the stronger an unclamping force for separating the clamp 15 from the turntable 8 should be. Hence, a great force is required when the pickup base 3 is lowered, and otherwise the clamp 14 is not separated from the turntable 8. As a result, it is impossible to unload the disk D.

Accordingly, the present invention has been made to solve these various problems occurring in the prior art, and an objective of the present invention is to separate a clamp from a turntable with a relatively weak force compared to the clamping force when unloading a disk.

In order to accomplish this objective, there is provided a clamping apparatus for a disk drive, including: a clamp selectively attached to a turntable to fix a disk, and formed with a hook wing protruding in a centrifugal direction along an outer circumferential edge thereof; and a hook section provided with a clamp through-hole through which the clamp is penetrated, and hooking and supporting the hook wing of the clamp on an edge of the clamp through-hole, wherein the clamp is slantly supported on the hook, and apply unclamping force while one side of the clamp is first brought into contact with the hook section when the disk is unloaded.

According to the inventive clamping apparatus for a disk drive having this construction, the clamping force for the clamp clamping the disk is relatively strong, while the unclamping force for separating the clamp from the turntable is relatively weak. Thus, the disk drive can be operated at a high speed, and operational reliability is improved.

The above and other objectives, features and advantages of the present invention will be more apparent from the following detailed description taken in conjunction with the accompanying drawings, in which:
FIG. 1 is a top plan view illustrating a construction of an ordinary disk drive;
FIG. 2 is a cross-sectional view illustrating a construction of a clamping apparatus and its surroundings in an ordinary disk drive;
FIG. 3 is a partial cross-sectional view illustrating a main construction of a disk drive to which an exemplary embodiment of a clamping apparatus according to the present invention is employed;
FIG. 4 is a partial cross-sectional view illustrating a main construction of a disk drive to which another embodiment of the present invention is employed;
FIG. 5 is a partial cross-sectional view illustrating a state in which a clamp is hooked on a hook section in an exemplary embodiment of the present invention;
FIG. 6 is an operational view illustrating a state where clamping force is applied to a clamp in an exemplary embodiment of the present invention; and
FIG. 7 is a partial cross-sectional view illustrating a construction of yet another embodiment of the present invention.

Hereinafter, exemplary embodiments of a clamping apparatus for a disk drive according to the present invention will be described with reference to the accompanying drawings. In the following description, a detailed description of known functions and configurations incorporated herein will be omitted when it may make the subject matter of the present invention unclear.

FIG. 3 is a partial cross-sectional view illustrating a main construction of a disk drive to which an exemplary embodiment of a clamping apparatus according to the present invention is employed.

As illustrated in FIG. 3, a spindle motor 22 is installed above a pickup base 20 installed inside the disk drive. The spindle motor 22 provides a driving force for the rotation of a disk D. A turntable 24 is installed to a rotational axle of the spindle motor 22. The disk D is seated on the turntable 24. An insertion cone 26 is provided at the center of the turntable 24, and a guide hole 27 is formed at the center of the insertion cone 26.

A clamp 30 comes into close contact with the disk D seated on the turntable 24 and integrally rotates with the disk. A cone seating recess 32 in which the insertion cone 26 is located is formed on a bottom surface of the clamp 30. A guide nose 33 protrudes in the cone seating recess 32 so as to be directed to the insertion cone 26 of the turntable 24. Here, the cone seating recess 32, the guide nose 33, etc. serve to accurately seat the clamp 30 on the turntable 24, but a construction different from the illustrated embodiment may be employed.

A magnet 34 is provided inside the clamp 30. The magnet 34 is preferably provided at the inside of the clamp 30 which corresponds to the cone seating recess 32. The magnet 34 allows the clamp 30 to be attached to the insertion cone 26 by its magnetic force. To this end, the insertion cone 26 should be made of a magnetic material itself or is provided with a separate magnet. For reference, it is not essential to provide the magnet 34 inside the clamp 30. In other words, instead of the magnet 34, a weight is disposed inside the clamp 30, or the clamp 30 itself acts as the weight. Thereby, the disk D can be clamped.

The clamp 30 is so constructed that its upper end has a diameter larger than its lower end, and is formed with a hook wing 36 surrounding the upper end of the clamp 30. The hook wing 36 protrudes in a centrifugal direction along an outer circumferential edge of the clamp 30. When the pickup base 20 is relatively lowered and thus the clamp 30 is separated from the turntable 24, the hook wing 36 plays a role so that the clamp 30 is hooked and supported by a hook section 42 to be described below.

A cabinet 40 is to form an external appearance of the disk drive, and is provided with the hook section 42 on one side thereof. The hook section 42 is constructed by concavely forming one side of the cabinet 40. A clamp through-hole 43, through which the clamp 30 is penetrated, is formed at the center of the hook section 42. The clamp through-hole 43 has a diameter that is larger than that of the lower end of the clamp 30 and smaller than that of the upper end of the clamp 30 at which the hook wing 36 is located. The hook wing 36 is hooked on a bottom surface of the hook section 42, which corresponds to an edge of the clamp through-hole 43, so that the hook wing 36 can be supported on the hook section 42. In the illustrated embodiment, the hook section 42 is integrally formed to the cabinet 40, but it may be separately prepared and attached. A reference numeral 42' indicates an isolation plate, which isolates the inside of the heating furnace 42 from the outside.

Meanwhile, in the present embodiment, an unclamping protrusion 45 protrudes from one side of a top surface of the hook section 42 on which the hook wing 36 is hooked. The unclamping protrusion 45 serves to support one side of the hook wing 36 earlier than the other portion of the hook section 42 when the disk D is unloaded. The unclamping protrusion 45 allows the clamp 30 to be slantly supported on the hook section 42. The unclamping protrusion 45 is a portion where the hook section 42 is brought into contact with the hook wing 36 of the clamp 30 earliest of all when the disk D is unloaded. The unclamping protrusion 45 provides unclamping force to one side of the edge of the hook wing 36, thereby generating a moment from the clamp 30 and thus separating the clamp 30 from the turntable 24.

The unclamping protrusion 45 is preferably located at a position that is relatively remote from a lifting rotation center of the pickup base 20. This is because the unclamping protrusion 45 is a portion where the hook wing 36 can contact the hook section 42 relatively early in view of the movement trajectory of the clamp 30 when the pickup base 20 is lowered, and thereby the unclamping force can have the greatest effect.

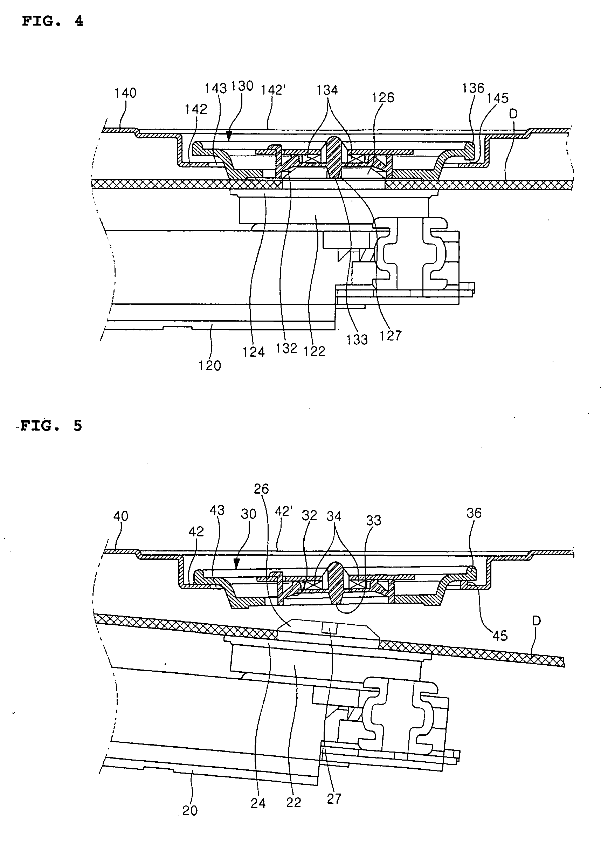

Next, another embodiment of the present invention will be described with reference to FIG. 4. For reference and convenience, the present embodiment has reference numerals adding a digit of 100 to the reference numerals of the embodiment illustrated in FIG. 3, and so the same construction will be not described.

As illustrated in FIG. 4, in this embodiment, the hook wing 136 of a clamp 130 is formed with an unclamping protrusion 145. The unclamping protrusion 145 is provided on one side of a bottom surface of the hook wing 136 at a position opposite to one side of an edge of the clamp through-hole 143 of a hook section 142. Thereby, the clamp 130 can be slantly supported on the hook section 142, and when the clamp 130 is seated on a turntable 124 and then the disk D is unloaded, the clamp 130 can be more readily separated from the turntable 124.

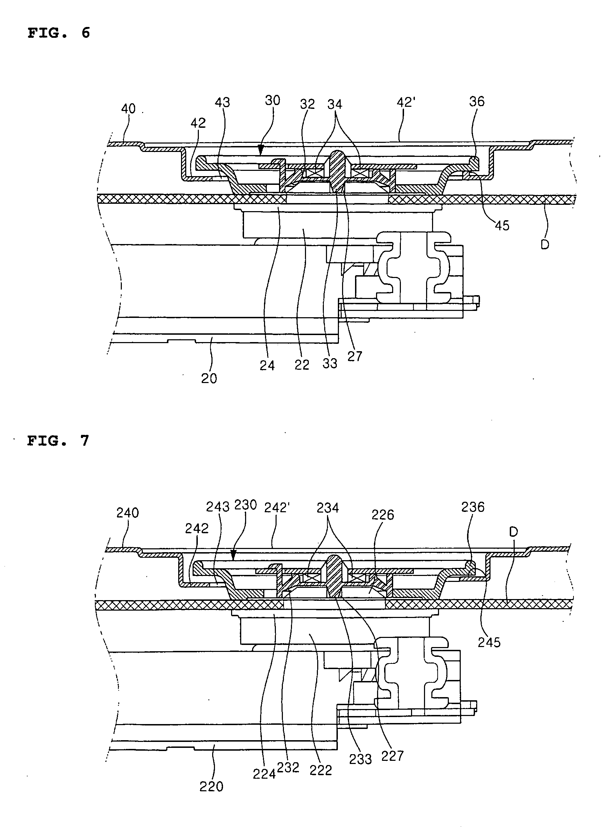

Meanwhile, according to the illustrated embodiments, the clamps 30 and 130 are supported on the hook section 42 and 142 by the unclamping protrusions 45 and 145, respectively. However, in FIG. 7, an edge of the clamp through-hole 243 of a hook section 242 is formed to have a step 245 in a diametrical direction without using the unclamping protrusions 45 and 145, thereby a clamp 230 can be slantly supported. In this case, one side of a hook wing 236 of the clamp 230 can be first supplied with unclamping force by a height difference of the hook section 242 when the disk is unloaded. For reference, the present embodiment illustrated in FIG. 7 has reference numerals adding a digit of 200 to the reference numerals of the embodiment illustrated in FIG. 3, and the other construction will be not described for convenience.

An operation of the clamping apparatus for a disk drive having the above-described construction according to the present invention will be described. For convenience of description, the description will be made on the basis of the embodiment illustrated in FIG. 3.

FIG. 5 illustrates a state in which the clamp 30 is unclamped. At this time, the clamp 30 is hooked with the hook section 42. In other words, the clamp 30 inserted into the clamp through-hole 43 is supported with the hook wing 36 hooked on the hook section 42 because the turntable 24 is relatively lowered. At this time, due to the unclamping protrusion 45, the clamp 30 is slantly hooked on the hook section 42.

In this state, the disk D is loaded and seated on the turntable 24. When the pickup base 20 is raised at the last stage of loading operation, the clamp 30 is seated on the turntable 24. That is, the clamp 30 is raised while the insertion cone 26 is positioned into the cone seating recess 32 of the clamp 30. At this time, the clamp 30 is attached to the turntable 24 by magnetic force of the magnet 34 or self-weight, thereby fixing the disk D to the turntable 24.

In this state, when the spindle motor 22 is driven, the turntable 24 rotates. The rotation of the turntable 24 causes the rotation of the disk D. As the disk D rotates and the pickup moves in a radial direction of the disk D, it is possible to record or read out a signal on or from the disk D.

Meanwhile, in order to unload the disk D during the operation of the disk drive, the spindle motor 22 should be stopped, and a separate loading motor should be driven. The front end of the pickup base 20 is lowered on the basis of the rear end by the driving of the loading motor.

In other words, when the front end of the pickup base 20 is lowered starting with the state of FIG. 5, one side of the hook wing 36 of the clamp 30 comes into contact with the unclamping protrusion 45 earliest of all. Thus, the unclamping force is applied to one end of the clamp 30 by the unclamping protrusion 45. Especially, because the unclamping force acts on a position spaced apart from a portion where the clamp 30 and the turntable 24 are attached to each other by a predetermined distance, the moment takes place, and thereby the clamp 30 can be separated from the turntable 24 with a relatively weak force. In this manner, the hook wing 36 is brought into contact with the unclamping protrusion 45 when the pickup base 20 is lowered, and then the unclamping operation is initiated. This state is illustrated in FIG. 6.

For reference, the unclamping protrusion 45 does not uniformly apply the force by which the clamp 30 and the turntable 24 are caused to be separated from each other to an entire contact surface of the clamp 30 and the turntable 24, but to an edge of one side of a contact surface of the clamp 30 and the turntable 24 first, thereby separating the clamp 30 from the turntable 24 with a relatively weak force.

As described above in detail, the clamping apparatus for a disk drive according to the present invention can obtain the following effects.

When the clamp is separated from the turntable, the unclamping force first acts on one side of the hook wing spaced apart from the portion where the clamp and the turntable are attached to each other by a predetermined distance. Thereby, a moment causing the clamp to be separated from the turntable is generated by the unclamping force, so that the clamp can be separated from the turntable with a weaker unclamping force.

Thus, the clamping force by which the clamp clamps the disk can increase relatively, while the unclamping force for separating the clamp from the turntable can decrease relatively. Consequently, the disk drive can be driven at a higher speed, and operational reliability on unloading operation of the disk, etc. can be improved.

## Claims

1. A clamping apparatus for a disk drive, comprising:
a clamp selectively attached to a turntable to fix a disk, and formed with a hook wing protruding in a centrifugal direction along an outer circumferential edge thereof; and
a hook section provided with a clamp through-hole through which the clamp is penetrated, and hooking and supporting the hook wing of the clamp on an edge of the clamp through-hole,
wherein the clamp is slantly supported on the hook, and apply unclamping force while one side of the clamp is first brought into contact with the hook section when the disk is unloaded.

2. The apparatus as claimed in claim 1, wherein the hook section has an unclamping protrusion protruding from one surface of the hook section which corresponds to an edge of the clamp through-hole so as to make the clamp slanted.

3. The apparatus as claimed in claim 2, wherein the unclamping protrusion is located at a position most distant from a lifting center of a pickup base having the turntable on which the disk is seated.

4. The apparatus as claimed in claim 1, wherein the hook wing of the clamp is provided with an unclamping protrusion protruding toward the hook section to cause the clamp to be slantly supported on the hook.

5. The apparatus as claimed in claim 4, wherein the unclamping protrusion is located at a position most distant from a lifting center of a pickup base having the turntable on which the disk is seated.

6. The apparatus as claimed in claim 1, wherein the hook section corresponding to the edge of the clamp through-hole is formed to have a step so that the clamp is slantly supported on the hook.

7. The apparatus as claimed in claim 6, wherein a relatively high portion in the step of the hook section is located at a position most distant from a lifting center of a pickup base having the turntable on which the disk is seated.

8. The apparatus as claimed in claim 1, wherein the hook section is provided to a cabinet forming an external appearance of the disk drive.

9. A clamping apparatus for a disk drive, comprising:
a clamp selectively attached to a turntable to fix a disk, and formed with a hook wing protruding in a centrifugal direction along an outer circumferential edge thereof;
a hook section provided with a clamp through-hole through which the clamp is penetrated and which has a diameter smaller than that of the hook wing, and hooking and supporting the hook wing of the clamp; and
an unclamping protrusion provided on one side between the hook section and the hook wing, and first contacted with the hook section or the hook wing when the disk is unloaded to apply unclamping force.

10. The apparatus as claimed in claim 9, wherein the unclamping protrusion is located at a position most distant from a lifting center of a pickup base having the turntable on which the disk is seated.

11. The apparatus as claimed in claim 10, wherein the unclamping protrusion is formed on one side of the hook section so as to protrude toward the hook wing.

12. The apparatus as claimed in claim 10, wherein the unclamping protrusion is formed on one side of the hook wing so as to protrude toward the hook.

13. The apparatus as claimed in claim 9, wherein the hook section is provided to a cabinet forming an external appearance of the disk drive.
